# EUROPEAN PATENT SPECIFICATION

(11) **EP 4 241 904 B1**
(45) Date of publication and mention of the grant of the patent: **07.01.2026**
(21) Application number: 22160564.5
(22) Date of filing: 07.03.2022
(51) Int. Cl.: B22F 12/30, B22F 10/14, B33Y 30/00, B29C 64/245, B22F 12/00, B29C 64/165, B29C 64/232

(54) **PRINTING-PLATE LIFT FOR METAL-BINDER JETTING**
DRUCKPLATTENLIFT FÜR METALLBINDER-STRAHLEN
LÈVE-PLAQUE D'IMPRESSION POUR JET DE LIANT MÉTALLIQUE

(43) Date of publication of application: 13.09.2023
(73) Proprietor: Digital Metal AB, 263 39 Höganäs (SE)
(72) Inventor: KIMBLAD, Hans, Jonstorp (SE); LARSSON, Rickard, Lindome (SE)
(74) Representative: Pearl Cohen Zedek Latzer Baratz UK LLP

(56) References cited:
- CN-A- 107 081 902
- CN-A- 107 262 715
- CN-B- 105 945 282
- US-A1- 2011 241 947
- US-A1- 2020 269 353

## Description

### Technical field

The proposed technology relates to the field of additive manufacturing. The proposed technology relates specifically to printing-plate lifts for metal-binder jetting.

### Background

Metal-binder jetting is a sinter-based additive manufacturing technique. A thin layer of a metal-containing powder is applied on a horizontally oriented printing plate. For example, this can be done by a powder dispenser positioned above and moving across the printing plate. The powder dispenser has an elongated slit that is transverse to the movement, and the powder is dispensed via the slit. An inkjet print head imprints an ink containing a binder in the metal layer. The powder layer is heated to dry the ink, for example by a heat lamp. The printing plate rests on a printing-plate lift that lowers the printing plate, and a new layer is applied on the existing layer. The process is repeated until the complete structure has been printed. This printed structure is commonly called a green part.

The post-printing processes may vary. One example of such a process is given here. The printing plate is placed in an oven in which the green parts are heated and cured. The cured structures are commonly called brown parts. The remaining metal powder is removed from the printing plate and the brown parts. This can be done manually or by a machine. The brown parts are placed in a low-temperature furnace in which they are subjected to a combined debinding and sintering, which completes the process and provides the final structure.

The orientation or sideways positioning of the printing plate may change when it is lowered by the printing-plate lift. This will offset the already printed layer relative to the next layer to be printed, which reduces the precision of printing. There is also a risk that the printing plate is deformed while printing, which will also result in a reduced precision. There is also a need for a high precision printing-plate lift that has a long stroke length, which enables larger structures to be printed.

### Object

It is an object of the proposed technology to improved the accuracy and precision in metal-binder jetting, in particular in the positioning and orientation of the printing plate. It is also an object to avoid deformations of the printing plate during operation. It is a further object to provide a high precision printing-plate lift with long stroke length.
CN107262715 discloses a printing plate lift which is driven by a ball screw and having an associated drive unit. US 2011/241947 A1, US2020/269353 A1, CN 105 945 282 B and CN 107 081 902 are also prior art documents related to additive manufacturing lifting systems.

### Summary

The present invention is defined by the appended claims.

The proposed technology aims at meeting the above-mentioned challenges. According to a first disclosed example, a printing-plate lift, or z-unit, for metal-binder jetting is provided in accordance with claim 1.

It is understood that the lower support can be attached to, or form part of, a support for a complete printer. It is further understood that a threaded shaft is straight. That the drive shaft being positioned beside the threaded shaft means that they are not coaxial.

It is further understood that the position of the ball nut along the threaded shaft will change at a rotation of the latter. Thus, the drive unit, the power transmission, and the ball screw are configured to determine, or change, the vertical position, or elevation, of the plate-holder support relative to the lower support.

Given the same maximum elevation of the plate holder, the position of the drive shaft of the drive unit beside the threaded shaft of the ball screw allows for a longer threaded shaft as compared to the drive unit being positioned below the ball screw. This allows for larger components to be printed. It also allows for the plate holder to be elevated to a higher position, which can make the removal of the printing plate from the plate holder easier. For example, the printing plate can be raised above a table or slate positioned above the printing-plate lift.

The drive shaft of the drive unit may point, or extend, downward. It may be oriented vertically or parallel to the threaded shaft of the ball screw.

The drive unit may comprise an electric motor, or rotary actuator, operationally connected to the drive shaft. For example, the electric motor may be a rotary stepping motor or a rotary servomotor. The motor may be positioned beside the threaded shaft of the ball screw. For example, the drive shaft may be an extension of a motor shaft connected to a rotor of the motor. The drive unit may further comprise a gear train operationally connecting the motor and the drive shaft at a speed ratio, or gear ratio, that is less than one. This way, the drive shaft rotates slower than the rotor of the motor. The motor may be located above the drive shaft. Similarly, the gear train may be located above the drive shaft.

The power transmission may be configured to transfer torque from the drive shaft to the threaded shaft at a speed ratio, or gear ratio, that is lower than one. The power transmission may comprise a belt drive operationally connecting the drive shaft of the drive unit and the threaded shaft of the ball screw. The belt drive may be a two-pulley belt drive. For example, the belt drive may comprise a first pulley attached to and centered on the drive shaft, a second pulley attached to and centered on the threaded shaft, and a belt connecting the first pulley and the second pulley. The radius of the second pulley may be greater than the radius of the first pulley, thus providing a speed ratio between the input and the output that is smaller than one.

The printing-plate lift further comprises: a first guide rod and a second guide rod, wherein the first guide rod and the second guide rod are attached, or fixed, to the lower support and oriented vertically, or parallel to the threaded shaft of the ball screw. The plate-holder support is slidably supported by the first guide rod and the second guide rod and configured to move along the first guide rod and the second guide rod. This contributes to a stable positioning of the plate holder for printing-plate lifts having a long stroke length of the plate holder support.

The guide rods may be positioned on opposite sides of the threaded shaft. The threaded shaft may be positioned at the center between the guide rods. The guide rods and the threaded shaft may be coplanar, which means that they extend in a common plane. The guide rods may have circular cross sections. These features contribute to a more stable positioning of plate-holder support and an improved precision in the printing process. The distance between the guide rods may be greater than the width of the plate holder in the direction from the first guide rod to the second guide rod. This contributes to a more stable support of the plate holder.

The printing-plate lift may further comprise: a first guide and a second guide that slidably cooperate with the first guide rod and the second guide rod. The first guide may be a first bearing and the second guide may be a second bearing, and the first bearing and the second bearing may be linear plain bearings, or linear slide bearings. The first and second guides may be configured to prevent the plate-holder support from rotating relative to the lower support, for example at a rotation of the threaded shaft of the ball screw. They may also be configured to prevent the plate-holder support from tilting relative the first and second guide rods, and in extension relative to the lower support. These features contribute to an improved accuracy and precision in the positioning of the plate-holder support, and in extension an improved precision in the positioning of the printing plate.

It is understood that the first and second guides form part of the plate-holder support. Each guide may form a through-hole with a circular cross section, and the guide rods may extend through the through hole. The guides and the guide rods may be concentric. This way, the guides and the rods jointly cooperate to prevent the plate-holder support from turning or tilting relative to the lower support.

The plate-holder support may comprise: a base part, or transverse part, extending between the first guide rod and the second guide rod, wherein the ball nut is attached, or fixed, to the base part. It may further comprise: a center part, or column, having a lower end and an upper end, wherein the lower end is attached, or fixed, to the base part at the center between the first guide rod and the second guide rod, and the plate holder is attached, or fixed, to the center part at the upper end. This means that the center part extends upward from the base part. It is understood that the base part and the center part are rigid and self-supporting structures. This allows for a printing-plate lift with a stable and longer stroke length.

The base part may form a central through-hole through which the threaded shaft of the ball screw extends. The ball nut of the ball screw may be positioned within the central through-hole.

The center part may form an enclosed space. The center part may surround, or enclose, the threaded shaft. The threaded shaft may extend into the enclosed space from below, or via the central through-hole formed by the base part. Worded differently, the threaded shaft may extend into the center part from below. The center part may be elongated and aligned with the threaded shaft. This means that its length along the threaded shaft is greater than its width transverse to the threaded shaft. The center part may define a hollow cylinder aligned with the threaded shaft. These features contribute to a longer stroke length.

The base part of the plate-holder support may be slidably supported by the first guide rod and the second guide rod and configured to move along the first guide rod and the second guide rod. The first guide and the second guide may form part of the base part. For example, they may be positioned in through-holes formed by the base part.

The printing-plate lift may further comprise: a linear encoder comprising a sensor that is fixed in position relative to the lower support and a scale that is attached, or fixed, to the center part of the plate-holder support. The sensor and the scale cooperate and are configured to determine the vertical position, or elevation, of the plate-holder support relative to the lower support, or to any component of the printing-plate lift that is fixed in position relative to the lower support.

It is understood that the scale may be aligned with the threaded shaft of the ball screw. The sensor may be an optical sensor and the scale may be a glass scale.

The plate holder is attached to the plate-holder support. Thus, the relative position of the plate holder, and in extension the relative position of a printing plate thereon, is also determined by the linear encoder.

The center part may be susceptible to thermal expansion. This is particularly the case if the powder layers are heated to dry the printed ink. The placement of the scale on the center part makes the position measurement less sensitive to the thermal expansion. The scale may be positioned closer to the upper end of the center part than to the lower end of the center part, which further reduces the sensitivity to thermal expansion of the center part. The linear encoder contributes to an improved accuracy and precision in the positioning of the printing plate.

The printing-plate lift may further comprise: an upper support, or table, wherein the first guide rod and the second guide rod are attached, or fixed, to the upper support. The upper support forms a central aperture through which the center part of the plate-holder support extends. This means that the lower end of the center part is located below the central aperture and the upper end of the center part is located above the central aperture. In extension, this means that the plate holder is located above the central aperture. It is understood that the upper support is located above the lower support. The guide rods may fix the position of the upper support relative to the lower support. The guide rods may support the upper support.

The sensor of the linear encoder may be attached, or fixed, to the upper support. It may be located at the central aperture formed by the upper support. Further, it may be located below the central aperture. The central aperture may be configured receive the scale of the linear encoder at an upward movement of the plate-holder support. Worded differently, the central aperture may be configured allow passage of the scale of the linear encoder at an upward movement of the plate-holder support.

The upper support comprises: a central guide that slidably cooperate with the center part of the plate-holder support. The central guide may be a central bearing, and the central bearing may be a linear slide bearing. The central guide may be positioned at the central aperture formed by the upper support. It may form the central aperture. The central guide may be configured to prevent the center part of the plate-holder support from tilting relative to the upper support. These features contribute to an improved accuracy in the positioning of the plate holder, and in extension the printing plate. This is particularly advantageous in the combination with a plate-holder support having a center part that extends upward from a base part and the base part being slidably supported by the first guide rod and the second guide rod, with the guide rods preventing the plate-holder support from rotating relative to the lower support, for example at a rotation of the threaded shaft of the ball screw.

The central guide may be configured receive the scale of the linear encoder at an upward movement of the plate-holder support. Worded differently, the central guide may be configured allow passage of the scale of the linear encoder at an upward movement of the plate-holder support.

The plate holder may define a planar upper surface, and the plate holder comprises: three face seals extending from the upper surface, or facing upward, for sealing to, or cooperating with, a printing plate, wherein the face seals are positioned to define, or in, an isosceles triangle having an apex corner and two side corners. The plate holder further comprises: an evacuation inlet located within each face seal. One of the face seals is positioned at the apex corner and the other two face seals are positioned at the side corners, wherein each face seal encloses a seal area, and the seal area of the face seal at the apex corner is greater than the seal area of each of the face seals at the side corners.

The evacuation inlet may be located within the seal area of the face seal. It is understood that the evacuation inlet allows for the pressure within the face seal to be reduced. This has the effect that a printing plate positioned on the plate holder is secured to the plate holder. It is understood that an isosceles triangle has a base, or base side, and two legs, or sides, and that the legs have the same lengths. An apex corner is understood as the corner that is opposite the base of an isosceles triangle. It is further understood that the legs connect at the apex corner, and that each of the legs connect to the base at a side corner.

A face seal is understood as a seal in which the sealing surfaces are normal to the axis of the seal. For example, a planar bottom surface of a printing plate may constitute a sealing surface in the radial direction with respect to the axis of the seal. Each face seal may have a symmetry axis normal to the upper surface of the plate holder. Each face seal may have at least a 180° rotational symmetry with respect to the symmetry axis. It is understood that the axis of a face seals is parallel to, or colinear with, the symmetry axis.

During use, each evacuation inlet is connected to a vacuum system that evacuates the face seal. This may deform the printing plate, as is further explained below. It is understood that the plate holder has exactly three face seals. The three face seals jointly define a contact plane for a printing plate. This reduces deformations of the printing plate, thus contributing to an improved precision in the printing. Printing plates are typically rectangular. Thus, when securing the printing plate to the plate holder by evacuating the face seals, the resulting forces acting on the printing plate will be unevenly distributed. The uneven force distribution may result in deformations of the printing plate, or even result in the printing plate coming loose. This reduces the precision of the printing, particularly if the longer sides of the rectangular printing plate are positioned parallel with the base of the triangle defined by the face seals. Thus, the above-described seal areas and positions of the face seals allow for rectangular printing plates with higher aspect ratios to be used without negatively affecting the precision.

Preferably, the isosceles triangle has exactly two sides of equal lengths. The length of the base may be longer than the length of the legs. Worded differently, the angle between the legs, or the apex angle, may be greater than 60°. For example, the length of the legs may be in the range 80-90% of the length of the base. Alternatively, the triangle defined by the three gaskets may be an equilateral triangle, which means that the lengths of the base and the legs are the same.

The geometric centers of the seal areas of the face seal may define the isosceles triangle. Worded differently, the geometric center of the seal areas of each face seal may be positioned at a corner of the isosceles triangle.

The upper surface of the plate holder may form grooves in which the face seals are fitted, or positioned.

The planar upper surface of the plate holder may be rectangular and have a first pair of parallel sides and a second pair of parallel sides, wherein the sides of the first pair are longer than the sides of the second pair, and the base of the isosceles triangle is parallel to the first pair of parallel sides. It has been found that this, in conjunction with the abovementioned seal areas, reduces the deformation of printing plates that have the same shape and are aligned with the upper surface.

Each face seal may constitute a spacer between the upper surface of the plate holder and the printing plate. This means that during use, the face seals will not compress such that the printing plate is flush with the upper surface of the plate holder. The three face seals may have equal heights relative to the upper surface. Worded differently, they may provide the same spacing between the upper surface and the plate holder.

The seal area of each of the face seals at the side corners may define a disc, or be disc shaped. For example, the face seals may be circular.

As mentioned above, the isosceles triangle may have a base, or base side, and the apex corner is opposite the base. The face seal at the apex corner may be elongated and aligned with, or parallel to, the base of the isosceles triangle. This contributes to reduce the deformation of a printing plate during use, in particular if it is rectangular and aligned with the base of the isosceles triangle. It has been found that this is particularly advantageous in combination with the face seals at the side corners being disc shaped.

The seal area of the face seal at the apex corner may be composed of two disjoint half-discs connected by a rectangle with the straight side of one of the half-discs connecting and conforming to on one side of the rectangle and the straight side of the other half-discs connecting and conforming to the opposite side of the rectangle. This means that the face seal at the apex corner is elongated. That two sides conform means that they have the same length and are mutually completing. Alternatively worded, the corners on one side of the rectangle may pairwise connect to the corners of one of the half-discs and the corners on the other side of the rectangle may pairwise connect to the corners of the other half-disc. A half-disc is understood as a disc sector of 180°. The sides of the rectangle that are disjoint from, or not connected to, the half-discs are straight. The sides of the rectangle that are disjoint from the half-discs may be parallel to the base of the isosceles triangle defined by the face seals.

The seal area of the face seal at the apex corner may be in the range 20-50%, or 30-40%, greater than the seal area of each of the face seals at the side corners. The face seals at the side corners may have the same seal area. They may define seal areas having the same geometry, for example both seal areas may be disc-shaped as mentioned above.

The plate holder may further comprise: an adjustable spacer located within each face seal, wherein each adjustable spacer defines a variable separation between the upper surface of the plate holder and the printing plate. Each adjustable spacer may be located at the geometric center of the seal area of the face seal it is located within, or at the symmetry axis of the face seal it is located within. Alternatively worded, each adjustable spacer may be located at the corners of the isosceles triangle.

Each adjustable spacer may comprise a threaded hole in the upper surface of the plate holder and a cooperating threaded screw positioned in the threaded hole. The separation between the upper surface of the plate holder and the printing plate can then be varied by turning the screw. The printing plate may be deformed by a face seal as such upon evacuation via the evacuation inlet within the face seal, typically by bulging toward the plate holder at the geometric center of the seal area of the face seal. The adjustable spacers may be employed to prevent this from happening, which contributes to an improved precision in the printing.

The plate holder may further comprise: one or more additional adjustable spacers located outside the face seal, wherein each additional adjustable spacer defines a variable separation between the upper surface of the plate holder and the printing plate. Preferably, the additional adjustable spacers are located within the isosceles triangle. Each additional adjustable spacer may comprise an additional threaded hole in the upper surface of the plate holder and a cooperating additional threaded screw positioned in the threaded hole.

According to a second disclosed example of the proposed technology a plate holder for supporting, or holding, a printing plate, is provided. The plate holder may have any of the features of the plate holder described above.

### Brief description of the drawings

A more complete understanding of the abovementioned and other features and advantages of the proposed technology will be apparent from the following detailed description in conjunction with the appended drawings, wherein:
Figure 1 is an exploded perspective view of a printing-plate lift.
Figure 2 is a perspective view of the printing-plate lift.
Figure 3 is a side view of the printing-plate lift.
Figure 4 is cross-sectional view of the printing-plate lift.
Figures 5a and 5b are perspective views showing different positions of the plate-holder support relative to the lower support.
Figures 6a to 6c show a perspective view, a cross-sectional view, and a top view of the plate holder.

### Description of the drawings

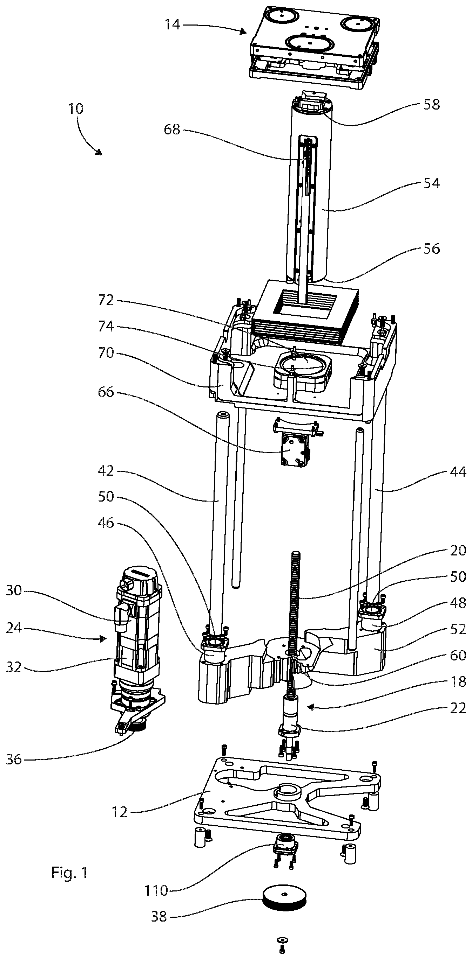

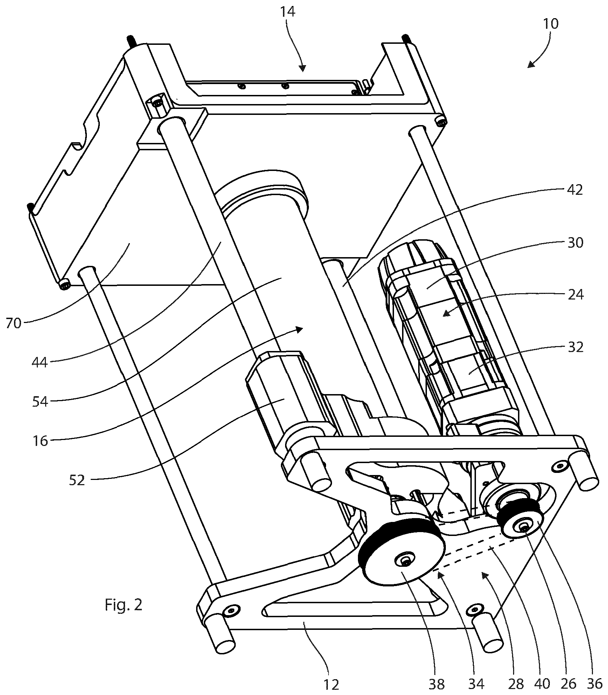

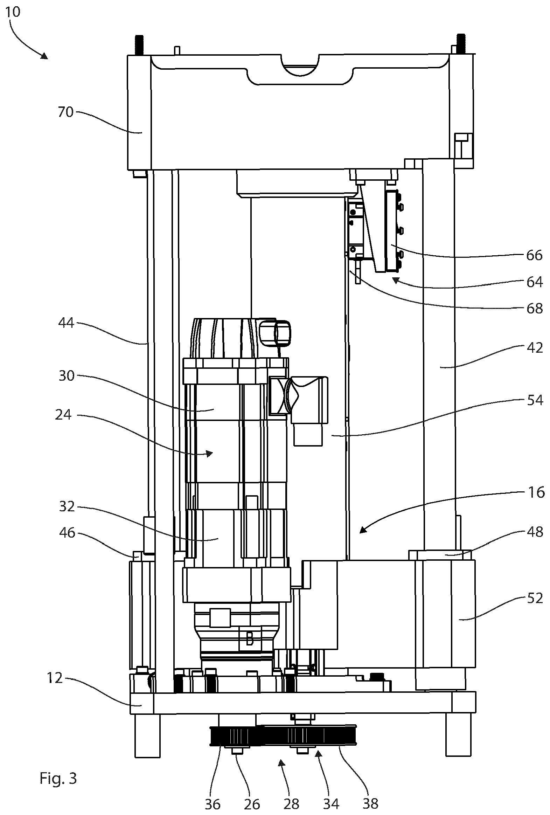

Figures 1 to 6 show an embodiment of a printing-plate lift 10. An exploded perspective view is shown in Figure 1. The printing-plate lift 10 has a lower support 12, a plate holder 14 that can support a printing plate (not shown), a plate-holder support 16, a ball screw 18, a drive unit 24, a power transmission 28, a first guide rod 42, a second guide rod 44, a first guide 46, a second guide 48, a linear encoder 64, and an upper support 70.

The plate-holder support 16 has a base part 52 that extends between the first guide rod 42 and the second guide rod 44 and a center part 54 with a lower end 56 attached to the base part 52 and an upper end 58 to which the plate holder 14 is attached. The base part 52 forms a central through-hole 60 and the center part 54 forms an enclosed space 62 connected to the central through-hole 60.

The ball screw 18 has a vertical and threaded shaft 20 that is connected to the lower support 12 by a bearing 110 that rotationally supports the threaded shaft 20. The threaded shaft 20 extends through the central through-hole 60 of the base part 52 into the enclosed space 62 formed by the center part 54. The ball screw also has a ball nut 22. The position of the ball nut 22 along the threaded shaft 20 can be changed by rotating the threaded shaft 20. The ball nut 22 is positioned within the central through-hole 60 and attached to the base part 52 of the plate-holder support 16. This way, the elevation of the plate-holder support 16 is determined by a rotation of the threaded shaft 20.

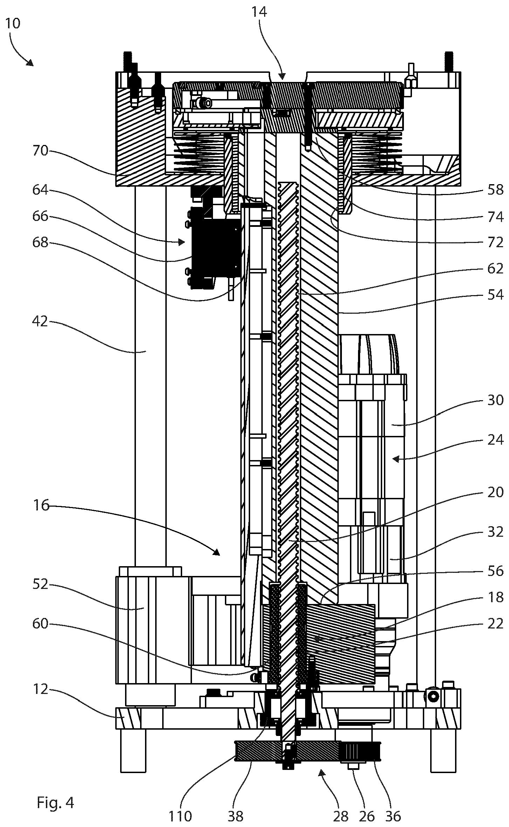

The drive unit 24 has a drive shaft 26 that can deliver torque. The drive shaft 26 is positioned beside the threaded shaft 20, as shown in Figure 4. The drive shaft 26 of the drive unit 24 is oriented vertically parallel to the threaded shaft 20 of the ball screw 18 and extends downward. The drive unit 24 has a motor 30 in the form of a rotary servomotor located above the drive shaft 26. The motor 30 is operationally connected to the drive shaft 26 by a gear train 32 having a speed ratio that is less than one.

The power transmission 28 has a two-pulley belt drive 34 with a first pulley 36 attached to and centered on the drive shaft 26, a second pulley 38 attached to and centered on the threaded shaft 20, and a belt 40 connecting the first pulley 36 and the second pulley 38. The radius of the second pulley 38 is greater than the radius of the first pulley 36, giving a speed ratio between the input and the output that is smaller than one. This way, the power transmission 28 operationally connects the drive shaft 26 of the drive unit 24 and the threaded shaft 20 of the ball screw 18 and the power transmission 28 rotates the threaded shaft 20 at a rotation of the drive shaft 26.

As described above, the ball nut 22 is attached to the plate-holder support 16 and the elevation of the plate-holder support 16 is determined by a rotation of the threaded shaft 20. Thus, the drive unit 24, the power transmission 28, and the ball screw 18 are configured to determine the vertical position of the plate-holder support 16 relative to the lower support 12.

The first guide rod 42 and a second guide rod 44 have circular cross sections and are oriented vertically and parallel to the threaded shaft 20. The first and second guide rods 42 and 44 are attached to the lower support 12 and positioned on opposite sides of the threaded shaft 20 with the threaded shaft 20 positioned at the center between the guide rods 42 and 44 in a coplanar relationship.

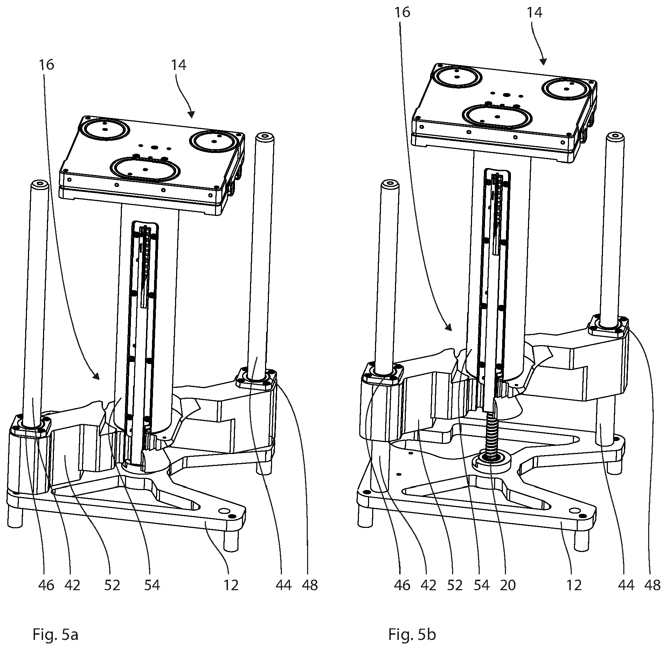

The plate-holder support 16, more precisely its base part 52, is slidably supported by the first guide rod 42 and the second guide rod 44 and it can move along the first guide rod 42 and the second guide rod 44, as illustrated in Figures 5a and 5b.

The first guide 46 and a second guide 48 are linear plain bearings and form part of the plate-holder support 16, or more precisely its base part 52. Each guide 46 and 48 form a through-hole 50 with a circular cross section, and the first guide rod 42 is concentric with and extend through the through-hole 50 of the first guide 46, and the second guide rod 44 is concentric with and extend through the through-hole 50 of the second guide 48. This way, the guides 46 and 48 and the rods 42 and 44 jointly cooperate to prevent the plate-holder support 16 from turning or tilting relative to the lower support 12.

The upper support 70 is attached to and supported by the first guide rod 42 and the second guide rod 44, thus fixing the position of the upper support 70 relative to the lower support 12. It forms a central aperture 72 through which the center part 54 of the plate-holder support 16 extends. The lower end 56 of the center part 54 is located below the central aperture 72 and the upper end 58 of the center part 54 is located above the central aperture 72, which is shown in Figure 4. The plate holder 14 is located above the central aperture 72.

The upper support 70 has a central guide 74 in the form of a linear slide bearing positioned at the central aperture 72 formed by the upper support 70. The central guide 74 slidably cooperate with the center part 54 of the plate-holder support 16, thus preventing the center part 54 of the plate-holder support 16 from tilting relative to the upper support 70.

The linear encoder 64 has a sensor 66 in the form of an optical sensor attached to the upper support 70. It is located below and at the central aperture 72 formed by the upper support 70. This way, it is fixed in position relative to the lower support 12. The linear encoder 64 further has a scale 68 in the form of a glass scale that is attached to the center part 54 of the plate-holder support 16 and aligned with the threaded shaft 20 of the ball screw 18. The sensor 66 and the scale 68 cooperate to determine the vertical position, or elevation, of the plate-holder support 16 relative to the lower support 12. The linear encoder 64 can be recalibrated to determine the position of a printing plate on the plate holder 14.

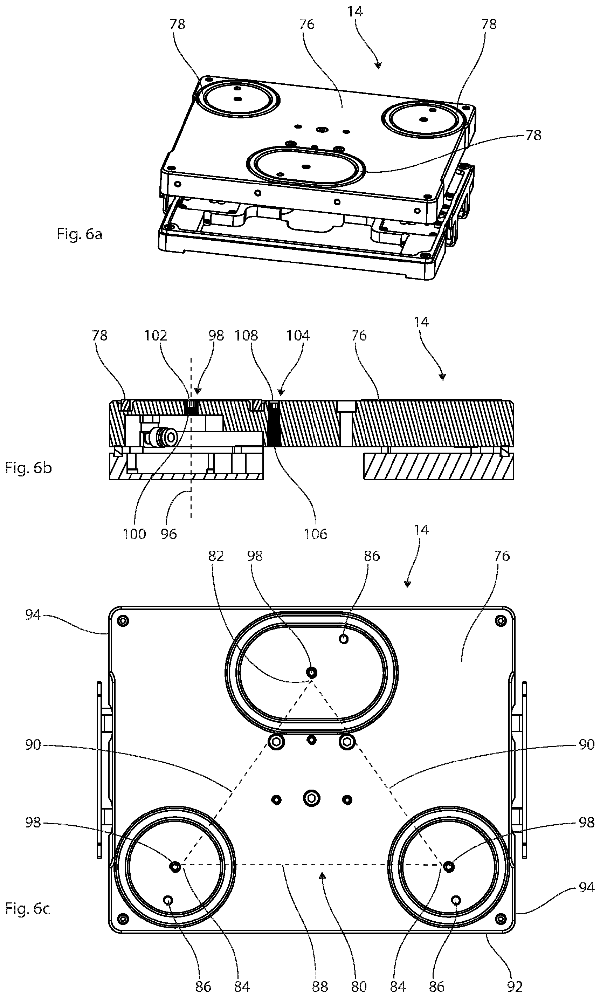

Details of the plate holder 14 are shown in Figures 6a to 6c. The plate holder 14 defines a rectangular planar upper surface 76 and has three face seals 78 of silicone rubber positioned in grooves formed in the upper surface 76. The face seals 78 extend from the upper surface 76 and can seal to a printing plate. The face seals 78 also constitute spacers between the upper surface 76 and the printing plate.

Each face seal 78 encloses a seal area. The plate holder 14 has an evacuation inlet 86 located within each face seal 78 that allows for the pressure within the face seal 78 to be reduced to secure the printing plate to the plate holder 14.

The geometric centers 96 of the seal areas of the face seal 78 defines an isosceles triangle 80 indicated by dashed lines in Figure 6c. The geometric centers 96 coincide with the symmetry axes 96 of the face seals 76. Thus, the face seals 78 are positioned to define an isosceles triangle 80. The isosceles triangle 80 has an apex corner 82 and two side corners 84. The isosceles triangle 80 has a base 88 and two legs 90. The base 80 is longer than the legs 90, while the legs 90 have the same length. The face seals 78 positioned at the apex corner 82 has a greater seal area than the face seals 78 that are positioned at the side corners 84. The latter face seals 78 have the same seal area.

The rectangular planar upper surface 76 has a first pair of parallel sides 92 and a second pair of parallel sides 94, and the sides 92 of the first pair are longer than the sides 94 of the second pair. The base 88 of the isosceles triangle 80 is parallel to the first pair of parallel sides 92.

The seal area of the face seal 78 at the apex corner 82 is composed of two disjoint half-discs connected by a rectangle. The corners on one side of the rectangle pairwise connect to the corners of one of the half-discs and the corners on the other side of the rectangle pairwise connect to the corners of the other half-disc. The sides of the rectangle that are disjoint from the half-discs are parallel to the base 88 of the isosceles triangle 80. This way, the face seal 78 at the apex corner 82 is elongated and aligned with the base 88 of the isosceles triangle 80. The seal area of each of the face seal 78 at the side corners 84 defines a disc. The discs and the abovementioned half-discs have the same radius.

The plate holder 14 has an adjustable spacer 98 located at the geometric center of the seal area of each face seal 78. Each adjustable spacer 98 has a threaded hole 100 in the upper surface 76 of the plate holder 14 and a cooperating threaded screw 102 positioned in the threaded hole 100. The position of the threaded screw 102 can be adjusted by turning the threaded screw 12. This way, each spacer 98 is adjustable and defines a variable separation between the upper surface 76 of the plate holder 14 and a printing plate.

The plate holder 14 further has three additional adjustable spacers 104 located outside the face seal 78 and within the isosceles triangle 80. Each additional adjustable spacer 104 has an additional threaded hole 106 in the upper surface 76 of the plate holder 14 and a cooperating additional threaded screw 108 positioned in the threaded hole 106. As with the adjustable spacers 98, each additional adjustable spacer 104 defines a variable separation between the upper surface 76 of the plate holder 14 and a printing plate.

### Item list

10 printer-plate lift
12 lower support
14 plate holder
16 plate holder support
18 ball screw
20 threaded shaft of ball screw
22 ball nut of ball screw
24 drive unit
26 drive shaft of drive unit
28 power transmission
30 motor
32 gear train
34 belt drive of power transmission
36 first pulley of belt train
38 second pulley of belt train
40 belt
42 first guide rod
44 second guide rod
46 first guide
48 second guide
50 through-hole of guides
52 base part of plate-holder support
54 center part of plate-holder support
56 lower end of center part
58 upper end of center part
60 central through-hole of base part
62 enclosed space of center part
64 linear encoder
66 sensor of linear encoder
68 scale of linear encoder
70 upper support
72 central aperture of upper support
74 central guide
76 upper surface of plate holder
78 face seal
80 isosceles triangle
82 apex corner of isosceles triangle
84 side corner of isosceles triangle
86 evacuation inlet of isosceles triangle
88 base of isosceles triangle
90 legs of isosceles triangle
92 first pair of parallel sides of planar upper surface
94 second pair of parallel sides
96 symmetry axis of the seal or geometric center of seal area
98 adjustable spacer
100 threaded hole
102 threaded screw
104 additional adjustable spacer
106 additional threaded hole
108 additional threaded screw
110 bearing

## Claims

1. A printing-plate lift (10) for metal-binder jetting, wherein the printing-plate lift (10) comprises:
- a lower support (12),
- a plate holder (14) for supporting a printing plate,
- a plate-holder support (16), wherein the plate holder (14) is attached to the plate-holder support (16),
- a ball screw (18) having a threaded shaft (20) and a ball nut (22), wherein the threaded shaft (20) is oriented vertically and rotationally supported relative to the lower support (12), and the ball nut (22) is attached to the plate-holder support (16),
- a drive unit (24) having a drive shaft (26) for delivering torque, wherein the drive shaft (26) is positioned beside the threaded shaft (20) of the ball screw (18), and
- a power transmission (28) operationally connecting the drive shaft (26) of the drive unit (24) and the threaded shaft (20) of the ball screw (18), wherein the power transmission (28) is configured to rotate the threaded shaft (20) at a rotation of the drive shaft (26)
- a first guide rod (42) and a second guide rod (44), wherein the first guide rod (42) and the second guide rod (44) are attached to the lower support (12) and oriented vertically, or parallel to the threaded shaft (20) of the ball screw (18),
wherein the plate-holder support (16) is slidably supported by the first guide rod (42) and the second guide rod (44) and configured to move along the first guide rod (42) and the second guide rod (44).

2. The printing-plate lift (10) according to claim 1, wherein the printing-plate lift (10) further comprises:
- a first guide (46) and a second guide (48) that slidably cooperate with the first guide rod (42) and the second guide rod (44), respectively, wherein first guide (46) and the second guide (48) are linear plain bearings.

3. The printing-plate lift (10) according to claim 1 or 2, wherein the plate-holder support (16) comprises:
- a base part (52) extending between the first guide rod (42) and the second guide rod (44), wherein the ball nut (22) is attached to the base part (52), and
- a center part (54) having a lower end (56) and an upper end (58), wherein the lower end (56) is attached to the base part (52) at the center between the first guide rod (42) and the second guide rod (44), and the plate holder (14) is attached, or fixed, to the center part (54) at the upper end (58).

4. The printing-plate lift (10) according to claim 3, wherein the printing-plate lift (10) further comprises:
- a linear encoder (64) comprising a sensor (66) that is fixed in position relative to the lower support (12) and a scale (68) that is attached to the center part (54) of the plate-holder support (16), wherein the sensor (66) and the scale (68) cooperate and are configured to determine the vertical position of the plate-holder support (16) relative to the lower support (12).

5. The printing-plate lift (10) according to any of the claims 1 to 4, wherein the printing-plate lift (10) further comprises:
- an upper support (70), wherein the first guide rod (42) and the second guide rod (44) are attached to the upper support (70), and the upper support (70) forms a central aperture (72) through which the center part (54) of the plate-holder support (16) extends.

6. The printing-plate lift (10) according to claim 1, wherein the upper support (70) comprises:
- a central guide (74) that slidably cooperate with the center part (54) of the plate-holder support (16), wherein the central guide (74) is a linear slide bearing.

7. The printing-plate lift (10) according to any of the claims 1 to 6, wherein the plate holder (14) defines a planar upper surface (76), and the plate holder (14) comprises:
- three face seals (78) extending from the upper surface (76) for sealing to a printing plate, wherein the face seals (78) are positioned to define an isosceles triangle (80) having an apex corner (82) and two side corners (84), and
- an evacuation inlet (86) located within each face seal (78) for allowing the pressure within the face seal (78) to be reduced,
wherein one of the face seals (78) is positioned at the apex corner (82) and the other two face seals (78) are positioned at the side corners (84), each face seal (78) encloses a seal area, and the seal area of the face seal (78) at the apex corner (82) is greater than the seal area of each of the face seals (78) at the side corners (84).

8. The printing-plate lift (10) according to claim 7, wherein the seal area of each of the face seals (78) at the side corners (84) defines a disc.

9. The printing-plate lift (10) according to claim 7 or 8, wherein isosceles triangle (80) has a base (88), the apex corner (82) is opposite the base (88), and the face seal (78) at the apex corner (82) is elongated and aligned with the base (88) of the isosceles triangle (80).

10. The printing-plate lift (10) according to claim 9, wherein the seal area of the face seal (78) at the apex corner (82) is composed of two disjoint half-disc connected by a rectangle with the straight side of one of the half-discs connecting and conforming to on one side of the rectangle and the straight side of the other half-discs connecting and conforming to the opposite side of the rectangle.

11. The printing-plate lift (10) according to any of the claim 7 to 10, wherein the plate holder (14) further comprises:
- an adjustable spacer (98) located within each face seal (78), wherein each adjustable spacer (98) defines a variable separation between the upper surface (76) of the plate holder (14) and a printing plate.

## Patentansprüche

1. Druckplattenlift (10) für Metallbinder-Strahlen, wobei der Druckplattenlift (10) Folgendes umfasst:
- einen unteren Träger (12),
- einen Plattenhalter (14) zum Tragen einer Druckplatte,
- einen Plattenhalterträger (16), wobei der Plattenhalter (14) an dem Plattenhalterträger (16) befestigt ist,
- einen Kugelgewindetrieb (18), der eine Gewindewelle (20) und eine Kugelmutter (22) aufweist, wobei die Gewindewelle (20) vertikal ausgerichtet ist und relativ zu dem unteren Träger (12) drehbar getragen wird und die Kugelmutter (22) an dem Plattenhalterträger (16) befestigt ist,
- eine Antriebseinheit (24), die eine Antriebswelle (26) zum Liefern von Drehmoment aufweist, wobei die Antriebswelle (26) neben der Gewindewelle (20) des Kugelgewindetriebs (18) positioniert ist, und
- eine Kraftübertragung (28), die die Antriebswelle (26) der Antriebseinheit (24) und die Gewindewelle (20) des Kugelgewindetriebs (18) funktionsfähig verbindet, wobei die Kraftübertragung (28) dazu konfiguriert ist, die Gewindewelle (20) bei einer Drehung der Antriebswelle (26) zu drehen,
- eine erste Führungsstange (42) und eine zweite Führungsstange (44), wobei die erste Führungsstange (42) und die zweite Führungsstange (44) an dem unteren Träger (12) befestigt und vertikal oder parallel zu der Gewindewelle (20) des Kugelgewindetriebs (18) ausgerichtet sind,
wobei der Plattenhalterträger (16) durch die erste Führungsstange (42) und die zweite Führungsstange (44) gleitbar getragen wird und dazu konfiguriert ist, sich entlang der ersten Führungsstange (42) und der zweiten Führungsstange (44) zu bewegen.

2. Druckplattenlift (10) nach Anspruch 1, wobei der Druckplattenlift (10) ferner Folgendes umfasst:
- eine erste Führung (46) und eine zweite Führung (48), die gleitend mit der ersten Führungsstange (42) bzw. der zweiten Führungsstange (44) zusammenwirken, wobei die erste Führung (46) und die zweite Führung (48) Lineargleitlager sind.

3. Druckplattenlift (10) nach Anspruch 1 oder 2, wobei der Plattenhalterträger (16) Folgendes umfasst:
- ein Bodenteil (52), das sich zwischen der ersten Führungsstange (42) und der zweiten Führungsstange (44) erstreckt, wobei die Kugelmutter (22) an dem Bodenteil (52) befestigt ist, und
- ein Mittelteil (54), das ein unteres Ende (56) und ein oberes Ende (58) aufweist, wobei das untere Ende (56) in der Mitte zwischen der ersten Führungsstange (42) und der zweiten Führungsstange (44) an dem Bodenteil (52) befestigt ist und der Plattenhalter (14) an dem oberen Ende (58) an dem Mittelteil (54) befestigt oder fixiert ist.

4. Druckplattenlift (10) nach Anspruch 3, wobei der Druckplattenlift (10) ferner Folgendes umfasst:
- einen Linearencoder (64), der einen Sensor (66) umfasst, der relativ zu dem unteren Träger (12) in seiner Position fixiert ist, und eine Skala (68), die an dem Mittelteil (54) des Plattenhalterträgers (16) befestigt ist, wobei der Sensor (66) und die Skala (68) zusammenwirken und dazu konfiguriert sind, die vertikale Position des Plattenhalterträgers (16) relativ zu dem unteren Träger (12) zu bestimmen.

5. Druckplattenlift (10) nach einem der Ansprüche 1 bis 4, wobei der Druckplattenlift (10) ferner Folgendes umfasst:
- einen oberen Träger (70), wobei die erste Führungsstange (42) und die zweite Führungsstange (44) an dem oberen Träger (70) befestigt sind und der obere Träger (70) eine mittlere Öffnung (72) bildet, durch die sich das Mittelteil (54) des Plattenhalterträgers (16) erstreckt.

6. Druckplattenlift (10) nach Anspruch 1, wobei der obere Träger (70) Folgendes umfasst:
- eine mittlere Führung (74), die gleitend mit dem Mittelteil (54) des Plattenhalterträgers (16) zusammenwirkt, wobei die mittlere Führung (74) ein Lineargleitlager ist.

7. Druckplattenlift (10) nach einem der Ansprüche 1 bis 6, wobei der Plattenhalter (14) eine ebene Oberseite (76) definiert und der Plattenhalter (14) Folgendes umfasst:
- drei sich von der Oberseite (76) erstreckende Gleitringdichtungen (78) zum Abdichten gegenüber einer Druckplatte, wobei die Gleitringdichtungen (78) so positioniert sind, dass sie ein gleichschenkliges Dreieck (80) mit einer Scheitelecke (82) und zwei Seitenecken (84) definieren, und
- einen Evakuierungseinlass (86), der sich innerhalb jeder Gleitringdichtung (78) befindet, um zu ermöglichen, dass der Druck innerhalb der Gleitringdichtung (78) reduziert wird,
wobei eine der Gleitringdichtungen (78) an der Scheitelecke (82) positioniert ist und die anderen zwei Gleitringdichtungen (78) an den Seitenecken (84) positioniert sind, jede Gleitringdichtung (78) einen Dichtungsbereich umschließt und der Dichtungsbereich der Gleitringdichtung (78) an der Scheitelecke (82) größer als der Dichtungsbereich von jeder der Gleitringdichtungen (78) an den Seitenecken (84) ist.

8. Druckplattenlift (10) nach Anspruch 7, wobei der Dichtungsbereich von jeder der Gleitringdichtungen (78) an den Seitenecken (84) eine Scheibe definiert.

9. Druckplattenlift (10) nach Anspruch 7 oder 8, wobei das gleichschenklige Dreieck (80) einen Boden (88) aufweist, die Scheitelecke (82) dem Boden (88) gegenüberliegt und die Gleitringdichtung (78) an der Scheitelecke (82) länglich und an dem Boden (88) des gleichschenkligen Dreiecks (80) ausgerichtet ist.

10. Druckplattenlift (10) nach Anspruch 9, wobei der Dichtungsbereich der Gleitringdichtung (78) an der Scheitelecke (82) aus zwei unzusammenhängenden Halbscheiben besteht, die durch ein Rechteck verbunden sind, wobei die gerade Seite einer der Halbscheiben sich mit einer Seite des Rechtecks verbindet und daran anpasst und die gerade Seite der anderen Halbscheibe sich mit der gegenüberliegenden Seite des Rechtecks verbindet und daran anpasst.

11. Druckplattenlift (10) nach einem der Ansprüche 7 bis 10, wobei der Plattenhalter (14) ferner Folgendes umfasst:
- einen einstellbaren Abstandshalter (98), der sich innerhalb jeder Gleitringdichtung (78) befindet, wobei jeder einstellbare Abstandshalter (98) einen variablen Abstand zwischen der Oberseite (76) des Plattenhalters (14) und einer Druckplatte definiert.

## Revendications

1. Dispositif de levage de plaque d'impression (10) pour jet de liant métallique, ledit dispositif de levage de plaque d'impression (10) comprenant :
- un support inférieur (12)
- un porte-plaque (14) destiné à supporter une plaque d'impression,
- un support de porte-plaque (16), le porte-plaque (14) étant fixé au support du porte-plaque (16),
- une vis à billes (18) comportant un arbre fileté (20) et un écrou sphérique (22), l'arbre fileté (20) étant orienté verticalement et soutenu en rotation par rapport au support inférieur (12), et l'écrou sphérique (22) étant fixé au support de porte-plaque (16),
- une unité d'entraînement (24) comportant un arbre d'entraînement (26) destiné à transmettre un couple, l'arbre d'entraînement (26) étant positionné à côté de l'arbre fileté (20) de la vis à billes (18), et
- un dispositif de transmission de puissance (28) reliant fonctionnellement l'arbre de transmission (26) de l'unité d'entraînement (24) et l'arbre fileté (20) de la vis à billes (18), le dispositif de transmission de puissance (28) étant configuré pour faire tourner l'arbre fileté (20) selon une rotation de l'arbre d'entraînement (26),
- une première tige de guidage (42) et une seconde tige de guidage (44), la première tige de guidage (42) et la seconde tige de guidage (44) étant fixées au support inférieur (12) et orientées verticalement, ou parallèlement à l'arbre fileté (20) de la vis à billes (18),
dans lequel le support de porte-plaque (16) est supporté coulissant par la première tige de guidage (42) et la seconde tige de guidage (44), et est configuré pour se déplacer le long de la première tige de guidage (42) et de la seconde tige de guidage (44).

2. Dispositif de levage de plaque d'impression (10) selon la revendication 1, ledit dispositif de levage de plaque d'impression (10) comprenant en outre :
- un premier guide (46) et un second guide (48) qui coopèrent de manière coulissante avec la première tige de guidage (42) et la seconde tige de guidage (44) respectivement, le premier guide (46) et le second guide (48) étant des paliers lisses linéaires.

3. Dispositif de levage de plaque d'impression (10) selon la revendication 1 ou 2, dans lequel le support de porte-plaque (16) comprend :
- une partie de base (52) s'étendant entre la première tige de guidage (42) et la seconde tige de guidage (44), l'écrou sphérique (22) étant fixé à la partie de base (52), et
- une partie centrale (54) comportant une extrémité inférieure (56) et une extrémité supérieure (58), l'extrémité inférieure (56) étant fixée à la partie de base (52), au centre, entre la première tige de guidage (42) et la seconde tige de guidage (44), et le porte-plaque (14) étant solidaire de la partie centrale (54) ou fixé à celle-ci au niveau de l'extrémité supérieure (58).

4. Dispositif de levage de plaque d'impression (10) selon la revendication 3, ledit dispositif de levage de plaque d'impression (10) comprenant en outre :
- un encodeur linéaire (64) comprenant un capteur (66) fixé en place par rapport au support inférieur (12) et une règle (68) fixée à la partie centrale (54) du support de porte-plaque (16), le capteur (66) et la règle (68) coopérant et étant configurés pour déterminer la position verticale du support de porte-plaque (16) par rapport au support inférieur (12).

5. Dispositif de levage de plaque d'impression (10) selon l'une quelconque des revendications 1 à 4, ledit dispositif de levage de plaque d'impression (10) comprenant en outre :
- un support supérieur (70), la première tige de guidage (42) et la seconde tige de guidage (44) étant fixées au support supérieur (70), et le support supérieur (70) formant une ouverture centrale (72) traversée par la partie centrale (54) du support de porte-plaque (16).

6. Dispositif de levage de plaque d'impression (10) selon la revendication 1, dans lequel le support supérieur (70) comprend :
- un guide central (74) qui coopère de façon coulissante avec la partie centrale (54) du support de porte-plaque (16), le guide central (74) étant un palier à glissement linéaire.

7. Dispositif de levage de plaque d'impression (10) selon l'une quelconque des revendications 1 à 6, dans lequel le porte-plaque (14) définit une surface supérieure plane (76), et le porte-plaque (14) comprend :
- trois joints mécaniques (78) s'étendant depuis la surface supérieure (76) pour assurer l'étanchéité avec une plaque d'impression, les joints mécaniques (78) étant positionnés de manière à définir un triangle isocèle (80) présentant un sommet (82) et deux angles latéraux (84), et
- un orifice d'évacuation (86) situé à l'intérieur de chaque joint mécanique (78) permettant de réduire la pression à l'intérieur du joint mécanique (78),
l'un des joints mécaniques (78) étant positionné au niveau du sommet (82) et les deux autres joints mécaniques (78) étant positionnés au niveau des angles latéraux (84), chaque joint mécanique (78) délimitant une zone d'étanchéité, et la zone d'étanchéité du joint mécanique (78) au niveau du sommet (82) étant supérieure à la zone d'étanchéité de chacun des joints mécaniques (78) au niveau des angles latéraux (84).

8. Dispositif de levage de plaque d'impression (10) selon la revendication 7, dans lequel la zone d'étanchéité de chacun des joints mécaniques (78) au niveau des angles latéraux (84) définit un disque.

9. Dispositif de levage de plaque d'impression (10) selon la revendication 7 ou 8, dans lequel le triangle isocèle (80) possède une base (88), le sommet (82) faisant face à la base (88), et le joint mécanique (78) au niveau du sommet (82) étant allongé et aligné avec la base (88) du triangle isocèle (80).

10. Dispositif de levage de plaque d'impression (10) selon la revendication 9, dans lequel la zone d'étanchéité du joint mécanique (78) au niveau du sommet (82) est composée de deux demi-disques disjoints reliés par un rectangle, le côté rectiligne de l'un des demi-disques étant relié à un côté du rectangle et épousant sa forme, et le côté rectiligne de l'autre demi-disque étant relié au côté faisant face au rectangle et épousant sa forme.

11. Dispositif de levage de plaque d'impression (10) selon l'une quelconque des revendications 7 à 10, dans lequel le porte-plaque (14) comprend en outre :
- une entretoise réglable (98) disposée à l'intérieur de chaque joint mécanique (78), chaque entretoise réglable (98) définissant une séparation variable entre la surface supérieure (76) du porte-plaque (14) et une plaque d'impression.
